# EUROPÄISCHE PATENTANMELDUNG

(11) **EP 1 391 381 A1**
(43) Veröffentlichungstag der Anmeldung: **25.02.2004**
(21) Anmeldenummer: 03018595.3
(22) Anmeldetag: 19.08.2003
(51) Int. Cl.: B64C 11/14

(54) **Aufklärungseinrichtung**

(30) Priorität: 23.08.2002 DE 10238718
(71) Anmelder: Diehl Munitionssysteme GmbH & Co. KG, 90552 Röthenbach (DE)
(72) Erfinder: Schleicher, Ulrich, Dr., 91217 Hersbruck (DE)
(74) Vertreter: Diehl Patentabteilung

(57) **Zusammenfassung**

Es wird eine Aufklärungseinrichtung (10) insbesondere für den Nahbereich < 2000 m beschrieben, die eine Nutzlast (16) und eine Fallverzögerungseinrichtung (18) aufweist. Die Aufklärungseinrichtung (10) ist als Handstartgerät ausgebildet, sie ist mittels einer Steuerungseinrichtung (12) steuerbar und weist einen Antriebsmotor (14) mit einer Motorwelle (20) auf. An der Motorwelle (20) ist eine Propellereinrichtung (22) mittels eines Spannzangen-Hülsenelementes (24) zeitsparend und zuverlässig befestigbar.

## Beschreibung

Die Erfindung betrifft eine Aufklärungseinrichtung gemäß dem Oberbegriff des Anspruches 1.

Derartige Aufklärungseinrichtungen für den Nahbereich < 2000 m kommen beispielsweise bei Polizei- und/oder Grenzschutzeinheiten zum Einsatz. Die Nutzlast der Aufklärungseinrichtung kann eine Videokamera, ein Nachtsichtgerät usw. beinhalten. Die Fallverzögerungseinrichtung ist von einem Lenk- bzw. Gleitschirm gebildet, der mit der Nutzlast in an sich bekannter Weise mittels Tragund Steuerleinen verbunden ist.

Der Erfindung liegt die Aufgabe zugrunde, eine Aufklärungseinrichtung der eingangs genannten Art zu schaffen, bei der die Nutzlast nicht nur zeitlich verzögert von einer gewissen Höhe absinkt, sondern die außerdem eine gesteuerte Bewegung in horizontaler Richtung durchzuführen in der Lage ist, wobei die Horizontalbewegung mit Hilfe einer Antriebseinrichtung erfolgt, die jeweils zeitsparend mit einem geeigneten Propeller kombinierbar ist.

Diese Aufgabe wird erfindungsgemäß durch die Merkmale des Anspruches 1 gelöst. Bevorzugte Aus- bzw. Weiterbildungen der erfindungsgemäßen Aufklärungseinrichtung sind in den Unteransprüchen gekennzeichnet.

Die erfindungsgemäße Aufklärungseinrichtung ist als Handstartgerät ausgebildet, so daß sie von einer Person ohne weitere Hilfsmittel und Gerätschaften gestartet werden kann. Zusätzlich zur Nutzlast und zur Fallverzögerungseinrichtung weist die Aufklärungseinrichtung einen Antriebsmotor und eine Steuerungseinrichtung auf. Die Motorwelle des Antriebsmotors steht aus der Aufklärungseinrichtung vor. An der Motorwelle ist eine Propellereinrichtung mittels eines Spannzangen-Hülsenelementes einfach und zeitsparend befestigbar. Erfindungsgemäß ist es einfach möglich, die Aufklärungseinrichtung jeweils mit einer passenden Propellereinrichtung zeitsparend zu kombinieren.

Die Propellereinrichtung weist zweckmäßigerweise ein Basiselement mit einem Gegenkonus für das Spannzangen-Hülsenelement auf. Das Spannzangen-Hülsenelement weist an seinem vom Konusendabschnitt entfernten Vorderabschnitt zweckmäßigerweise einen Außengewindeabschnitt auf, auf den zum Fixieren des Propellers der Propellereinrichtung am Basiselement der Propellereinrichtung und gleichzeitig insbesondere zum Befestigen der Propellereinrichtung an der Motorwelle ein Mutterelement aufschraubbar ist.

Mit dem Basiselement der Propellereinrichtung ist vorzugsweise ein Kappenelement der Propellereinrichtung verbindbar, das mit Aussparungen für den Propeller ausgebildet ist. Bei dem Propeller handelt es sich vorzugsweise um einen zweiflügeligen Propeller. Desgleichen ist es möglich, daß der Propeller dreiflügelig oder mehrflügelig ausgebildet ist.

Das Kappenelement ist mit dem Vorderabschnitt des Spannhülsenelementes verbindbar. Zu diesem Zwecke kann der Vorderabschnitt des Spannzangen-Hülsenelementes mit einem Innengewindeabschnitt und das Kappenelement mit einem zentralen Durchgangsloch mit einer Einsenkung ausgebildet sein, wobei durch das zentrale Durchgangsloch in den Innengewindeabschnitt ein Schraubelement einschraubbar ist, das mit seinem Schraubkopf in der Einsenkung formschlüssig angeordnet wird.

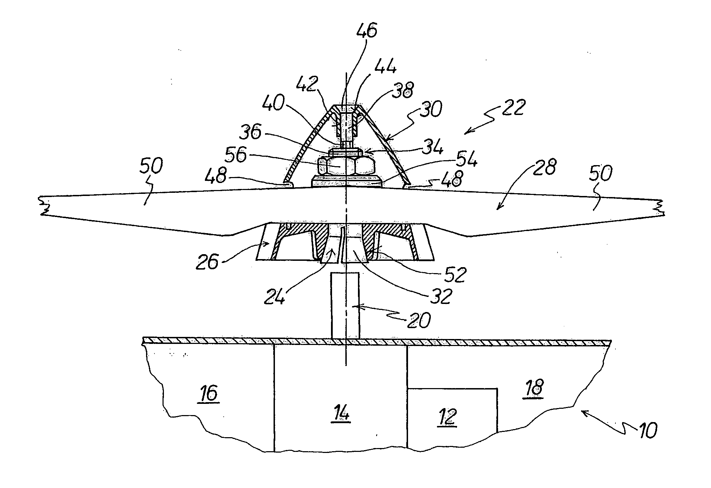

Ein Ausführungsbeispiel der Aufklärungseinrichtung mit der zugehörigen Propellereinrichtung ist in der Zeichnung verdeutlicht und wird nachfolgend beschrieben.

Die Figur zeigt schematisch einen Abschnitt der Aufklärungseinrichtung 10, die als Handstartgerät ausgebildet ist und die mittels einer Steuerungseinrichtung 12 steuerbar ist. Die Aufklärungseinrichtung 10 weist einen Antriebsmotor 14 auf und ist somit nach Art eines Modellflugzeuges gestaltet. Anstelle der Tragflächen eines Modellflugzeuges weist die Aufklärungseinrichtung 10 zusätzlich zu einer Nutzlast 16 eine Fallverzögerungseinrichtung 18 auf, die von einem Lenk- bzw. Gleitschirm gebildet ist.

Der Antriebsmotor 14 weist eine Motorwelle 20 auf, die aus der Aufklärungseinrichtung 10 vorsteht. An der Motorwelle 20 ist eine Propellereinrichtung 22 mittels eines Spannzangen-Hülsenelementes 24 zeitsparend und zuverlässig befestigbar. Die Propellereinrichtung 24 weist ein Basiselement 26, einen Propeller 28 und ein Kappenelement 30 auf.

Das Spannzangen-Hülsenelement 24 weist einen geschlitzten Konusendabschnitt 32 auf. Der vom Konusendabschnitt 32 entfernte Vorderabschnitt 34 des Spannzangen-Hülsenelementes 24 ist mit einem Außengewindeabschnitt 36 ausgebildet. Der Vorderabschnitt 34 des Spannzangen-Hülsenelementes 24 ist außerdem mit einem zentralen Innengewindeabschnitt für ein Schraubelement 38 ausgebildet, das einen Außengewindeabschnitt 40 aufweist.

Das Kappenelement 30 ist mit einem zentralen Durchgangsloch 42 ausgebildet, durch das sich das Schraubelement 38 spielfrei hindurcherstreckt. Das Kappenelement 30 ist vorderseitig mit einer Einsenkung 44 ausgebildet, die zur formschlüssigen Aufnahme eines Schraubkopfes 46 des Schraubelementes 38 dient.

Das Kappenelement 30 ist mit Aussparungen 48 ausgebildet, durch die sich die Flügel 50 des Propellers 28 hindurcherstrecken.

Das Basiselement 26 der Propellereinrichtung 22 ist mit einem Gegenkonus 52 für den Konusendabschnitt 32 des Spannzangen-Hülsenelementes 24 ausgebildet.

Bei der Befestigung der Propellereinrichtung 22 an der Aufklärungseinrichtung 10 wird wie folgt vorgegangen: Zuerst wird das Spannzangen- Hülsenelement 24 in das Basiselement 26 eingesteckt. Anschließend wird der Propeller 28 auf das Spannzangen-Hülsenelement 24 aufgesteckt, wobei der Propeller 28 am Basiselement 26 anliegt. Anschließend wird auf den Außengewindeabschnitt 36 des Spannzangen-Hülsenelementes 24 eine Unterlegscheibe 54 aufgesteckt. Danach wird auf den Außengewindeabschnitt 36 eine Schraubmutter 56 aufgeschraubt. Dabei wird der Propeller 28 gegen das Basiselement 26 gepreßt. Beim Aufschrauben der Schraubmutter 56 auf den Außengewindeabschnitt 36 des Spannzangen-Hülsenelementes 24 wird sein Konusendabschnitt 32 gegen die Motorwelle 20 gepreßt und auf diese Weise die Propellereinrichtung 22 mit der Motorwelle 20 der Aufklärungseinrichtung 10 fest verbunden. Nachfolgend wird das Kappenelement 30 mit Hilfe des Schraubelementes 38 mit dem Spannzangen-Hülsenelement 24 fest verbunden.

### Bezugsziffernliste:

- 10: Aufklärungseinrichtung
- 12: Steuerungseinrichtung (von 10)
- 14: Antriebsmotor (von 10)
- 16: Nutzlast (von 10)
- 18: Fallverzögerungseinrichtung (von 10)
- 20: Motorwelle (von 14)
- 22: Propellereinrichtung (an 20)
- 24: Spannzangen-Hülsenelement (von 22)
- 26: Basiselement (von 22)
- 28: Propeller (von 22)
- 30: Kappenelement (von 22)
- 32: Konusendabschnitt (von 24)
- 34: Vorderabschnitt (von 24)
- 36: Außengewindeabschnitt (an 34)
- 38: Schraubelement (für 30)
- 40: Außengewindeabschnitt (von 38)
- 42: zentrales Durchgangsloch (von 30)
- 44: Einsenkung (an 42)
- 46: Schraubkopf (von 38)
- 48: Aussparung (von 30 für 50)
- 50: Flügel (von 28)
- 52: Gegenkonus (von 26 für 32)
- 54: Unterlegscheibe (zwischen 28 und 56)
- 56: Schraubmutter (an 36)

## Patentansprüche

1. Aufklärungseinrichtung insbesondere für den Nahbereich < 2000 m, mit einer Nutzlast (16) und einer Fallverzögerungseinrichtung (18),
**dadurch gekennzeichnet,**
**daß** die Aufklärungseinrichtung (10) als Handstartgerät ausgebildet ist und zusätzlich zur Nutzlast (16) und Fallverzögerungseinrichtung (18) einen Antriebsmotor (14) aufweist, dessen Motorwelle (20) aus der Aufklärungseinrichtung (10) vorsteht, wobei an der Motorwelle (20) eine Propellereinrichtung (22) mittels eines Spannzangen-Hülsenelementes (24) befestigbar ist.

2. Aufklärungseinrichtung nach Anspruch 1,
**dadurch gekennzeichnet,**
**daß** die Propellereinrichtung (22) ein Basiselement (26) mit einem Gegenkonus (52) für das Spannzangen-Hülsenelement (24) aufweist.

3. Aufklärungseinrichtung nach Anspruch 1 oder 2,
**dadurch gekennzeichnet,**
**daß** das Spannzangen-Hülsenelement (24) an seinem vom Konusendabschnitt (32) entfernten Vorderabschnitt (34) einen Außengewindeabschnitt (36) aufweist, auf den zum Fixieren der Propellereinrichtung (22) an der Motorwelle (20) eine Schraubmutter (56) aufschraubbar ist.

4. Aufklärungseinrichtung nach Anspruch 2,
**dadurch gekennzeichnet,**
**daß** mit dem Basiselement (26) ein Kappenelement (30) verbindbar ist, das mit Aussparungen (48) für den Propeller (28) ausgebildet ist.

5. Aufklärungseinrichtung nach Anspruch 4,
**dadurch gekennzeichnet,**
**daß** das Kappenelement (30) mit dem Vorderabschnitt (34) des Spannzangen-Hülsenelementes (24) verbindbar ist.

6. Aufklärungseinrichtung nach Anspruch 5,
**dadurch gekennzeichnet,**
**daß** der Vorderabschnitt (34) des Spannzangen-Hülsenelementes (24) mit einem Innengewindeabschnitt und das Kappenelement (30) mit einem zentralen Durchgangsloch (42) mit einer Einsenkung (44) ausgebildet ist, durch das in den Innengewindeabschnitt ein Schraubelement (38) einschraubbar ist.
